# EUROPEAN PATENT APPLICATION

(11) **EP 3 000 638 A1**
(43) Date of publication of application: **30.03.2016**
(21) Application number: 14801071.3
(22) Date of filing: 15.04.2014
(51) Int. Cl.: B60J 5/04, E05B 85/10

(54) **HANDLE DEVICE FOR VEHICLE**

(30) Priority: 23.05.2013 JP 2013108661
(71) Applicant: Alpha Corporation, Yokohama-shi, Kanagawa 236-0004 (JP)
(72) Inventor: YANAGISAWA Takahiro, Yokohama-shi Kanagawa 236-0004 (JP); TO Gun, Yokohama-shi Kanagawa 236-0004 (JP)
(74) Representative: Reeve, Nicholas Edward
(86) International application number: PCT/JP2014/060678
(87) International publication number: WO 2014/188818

(57) **Abstract**

The purpose of the present invention is to provide a handle device for a vehicle, the handle device being able to be assembled with good work efficiency. A handle device for a vehicle is formed by overlaying and connecting a cover (4) to a case sub-assembly body (3) in which an electronic component (2) is held in a case (1). The case (1) is provided with a cable restraining section (7) which restrains a cable (6) while the cable (6) is bent at a right angle, the cable (6) having been led out of the electronic component (2) by a cable guide (5) to an end of the case (1) along an electronic component mounting surface. The slack of the cable (6) in a path on the case sub-assembly body (3), the path extending from the electronic component (2) to the cable restraining section (7), is restricted by the cable restraining section (7), thereby preventing the cable from getting caught during the overlaying of the cover (4).

## Description

### TECHNICAL FIELD

The present invention relates to a handle device for a vehicle.

### BACKGROUND ART

A device described in Patent Document 1 has been known as a handle device configured such that an electronic component is housed in a hollow section formed inside a handle and cables led out of the electronic component are led to the outside of the handle.

In this conventional example, the handle is formed by overlaying a grip (case), which holds an electronic part (electronic component), and a cover thereon, and harnesses (cables) led out of the electronic component are led to the outside of the handle through a handle seat connected to the overlaid body of the case and the cover.

### PRIOR ART DOCUMENT

### PATENT DOCUMENT

Patent Document 1: Japanese Patent Application Publication No. 2007-92510

### SUMMARY OF THE INVENTION

### PROBLEM TO BE SOLVED BY THE INVENTION

Here, in the above conventional example, the cables are not retrained when the case and cover are overlaid. This leads to a problem in that the cables easily get caught at the boundary in the overlaid body and therefore the assembling work efficiency is poor.

The present invention has been made to solve the above drawback, and an object thereof is to provide a handle device for a vehicle, the handle device being able to be assembled with good work efficiency.

### MEANS FOR SOLVING THE PROBLEM

According to the present invention, the above object is achieved by providing
a handle device for a vehicle, the handle device being formed by overlaying and connecting a cover 4 on and to a case sub-assembly body 3 including a case 1 and an electronic component 2 held therein, wherein
the case 1 is provided with a cable restraining section 7 configured to perpendicularly bend and restrain a cable 6 which is led out of the electronic component 2 and led by a cable guide 5 to an end of the case 1 along an electronic component mounting surface, and
the cable restraining section 7 restricts slack of the cable 6 in a path on the case sub-assembly body 3 from the electronic component 2 to the cable restraining section 7, to thereby prevent the cable 6 from being caught when the cover 4 is overlaid.

The handle device is formed by overlaying and connecting the cover 4 on and to the case sub-assembly body 3, which includes the case 1 and the electronic component 2 mounted thereon. The cable 6 led out of the electronic component 2 is guided on the case 1 to the end of the case 1, then bent substantially at a right angle at the end of the case 1, and thereafter led to the outside of the case 1, that is, the outside of the handle device.

After being perpendicularly bent, the cable 6 is restrained with the cable restraining section 7 to keep the perpendicularly bent posture. In this way, the cable 6 can maintain a predetermined routed posture on the case sub-assembly body 3 by using sliding resistance generated at the bending section and resistive force at the cable restraining section 7 against movement toward the electronic component 2.

As a result, it is possible to prevent the cable 6 from getting caught at the boundary in the overlaid bodies when the cover 4 is stacked due to slack of the cable 6, and also prevent an excessively high stress from being generated at the section where the electronic component 2 and the cable 6 are connected due to an improperly routed posture. Hence, the assembling work efficiency can be improved and failures due to disconnection can be prevented.

For the cable restraining section 7, various structures are available as long as the cable 6 can be prevented from slipping at this section.

However, the handle device for a vehicle may be configured such that the cable restraining section 7 is formed in a cylindrical shape with a side wall section thereof cut out along a longitudinal direction such that the cable restraining section 7 is capable of elastically retaining the cable 6, and an elastic spacer 8 is interposed between the cable 6 and the cable restraining section 7 to thereby improve sliding contact resistance of the cable 6 on the cable restraining section 7. In this way, the ease of the operation of restraining the cable 6 with the cable restraining section 7 can be improved, and sufficient sliding contact resistance can be ensured by the interposition of the spacer 8.

Also, the handle device for a vehicle may be configured such that
at the end of the case 1, a pressing piece 9 is provided which is configured to restrict rise of the cable 6 due to forcible bending thereof at the cable restraining section 7. In this way, the routed posture at the cable restraining section 7 can be reliably controlled.

In a case of manufacturing the handle device such that an electronic component 2 is fixed, by using filler resin, in an electronic component holding frame 10 formed on the case 1, the handle device may be configured such that it includes the electronic component 2 which is housed in the electronic component holding frame 10 formed on the case 1 and is fixed by filler resin that solidifies with time, and
the cable restraining section 7 restrains a cable 6 led out of the electronic component 2 to thereby prevent slack of the cable 6 inside the electronic component holding frame 10. In this way, no exclusive means is additionally required for holding the cable 6 in a predetermined posture until the filler resin solidifies. Hence, the efficiency of manufacturing of the case sub-assembly body 3 can be enhanced.

### EFFECT OF THE INVENTION

According to the present invention, unnecessary slack of the cable can be prevented. Hence, it is possible to reliably prevent the cable from getting caught when the cover is connected to the case sub-assembly body, for example, and thereby improve the assembly efficiency.

### BRIEF DESCRIPTION OF THE DRAWINGS

Fig. 1 is a set of views showing the present invention, and part (a) is a side view and part (b) is a cross-sectional view taken along line 1B-1B in part (a).
Fig. 2 is a plan view of a case sub-assembly body.
Fig. 3 is a set of cross-sectional views of a case assembly body, and part (a) is a longitudinal cross-sectional view and part (b) is a cross-sectional view taken along line 3B-3B in part (a).

### MODE FOR CARRYING OUT THE INVENTION

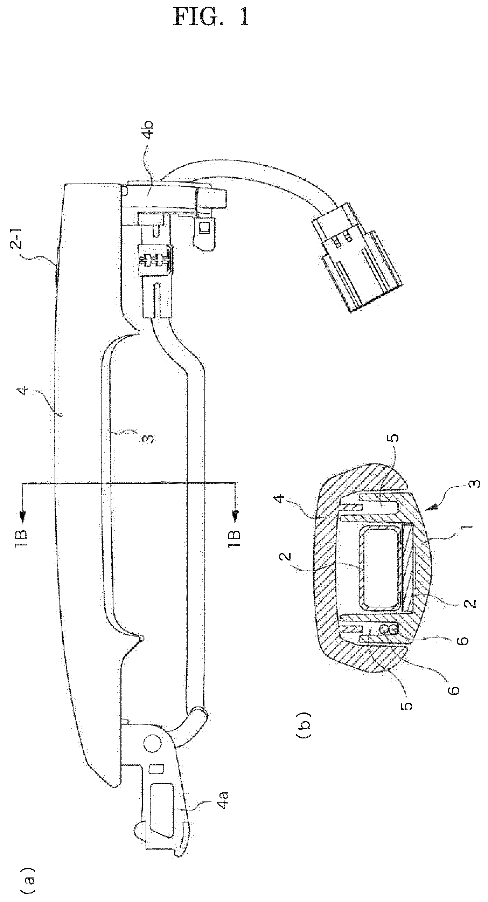

Fig. 1 and the following figures show an embodiment of the present invention which is made as an outside handle device for a vehicle. The handle device is what is called a grip-type handle device configured to be used in a state of being connected to a handle base not shown which is fixed to a door of the vehicle in advance. The handle device is used by gripping a middle section and turning the handle device about a rotational center at a portion of a front end section at which the handle device is connected to a handle base, such that the opposite end section is pulled toward the outside of the vehicle.

As shown in part (b) of Fig. 1, the handle device is formed by connecting a cover 4 to a case sub-assembly body 3 which is formed by fixing electronic components 2 to a case 1.

At the front end of the cover 4, a hinge protruding piece 4a is provided which is configured to, when connected to the handle base, come into contact with the handle base to form the rotational center mentioned above. At the rear end of the cover 4, an operation leg section 4b is provided which is inserted inside the door body and configured to operate an operation section of the handle base.

Also, a middle section of the cover 4, which the user grips at the time of operation, is formed in a C-shape in cross section, and a hollow grip section is formed by closing the opening with the case sub-assembly body 3.

In this example, a push-button switch 2-1, a capacitance sensor 2-2, and an antenna 2-3 are mounted as the electronic component 2 on the case 1. The push-button switch 2-1 functions as a switch configured to output an authentication confirmation signal from the vehicle side for authentication of the right of access to the vehicle by the user. The capacitance sensor 2-2 is configured to detect contact with the handle device by the user. The antenna 2-3 is used to communicate with a portable electronic key the user has.

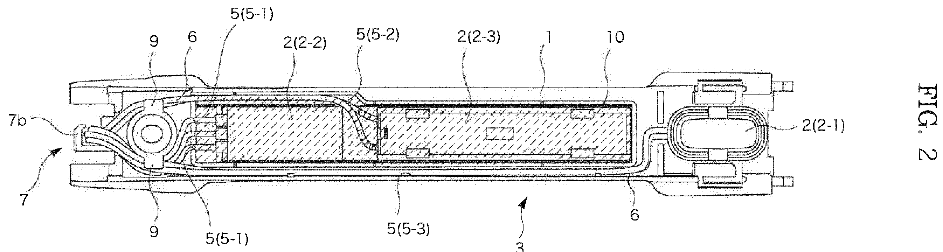

As shown in Fig. 2, the capacitance sensor 2-2 is housed in an electronic component holding frame 10 formed at a center section of the case 1. Moreover, the antenna 2-3 is overlaid on the capacitance sensor 2-2 and fixed by filler resin such as silicone filler which is filled and solidified in the electronic component holding frame 10.

Cables 6 which are led out of the capacitance sensor is guided to the outside of the electronic component holding frame 10 through cable guides 5-1 which are formed as fitting grooves in a front short-side section of the electronic component holding frame 10. Cables 6 from the antenna 2-3 are guided to the outside of the electronic component holding frame 10 through a cable guide 5-2 which is formed in a groove shape along the electronic component holding frame 10.

On the other hand, cables 6 which are led out of the push-button switch 2-1, fixed to a rear section of the case 1, are led to the front side through a cable guide 5-3 which is formed in a groove shape along the electronic component holding frame 10. These cables 6 from the push-button switch 2-1, the capacitance sensor 2-2, and the antenna 2-3 are guided to a cable restraining section 7.

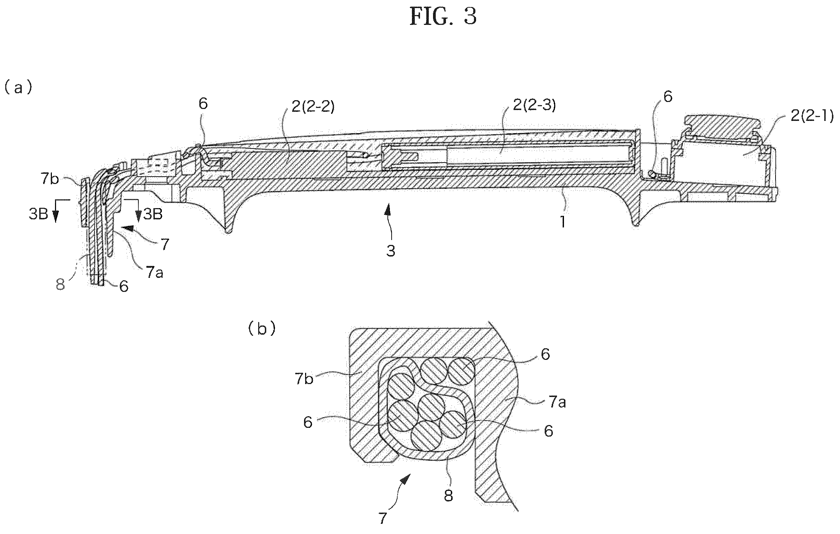

As shown in Fig. 3, the cable restraining section 7 is formed in a cylindrical shape with a side wall thereof cut out and includes a drooping piece 7a protruding from the front edge of the cover 4 in the back surface direction, and a cable locking piece 7b having an L-shape in cross section and protruding from the drooping piece 7a.

Thus, in this embodiment, as shown in part (b) of Fig. 3, by simply pushing in the plurality of cables 6 in a bundled state through the cut-out section, the cables 6 can be kept bundled without using a tie wrap or the like. Further, adequate sliding friction occurs between some of the cables 6 inserted in the cable restraining section 7 and between some of the cables 6 and the wall surface of the cable restraining section 7 due to pressure from the wall surface of the cable restraining section 7. Hence, relative movement of the cables 6 in the longitudinal direction is restricted.

Also, in this example, an appropriate number of cables 6 are bundled in advance with a tubular spacer 8. In this way, the cross-sectional area is increased as a whole and the sliding of the cables 6 inside the spacer 8 is restricted. Hence, the restraining force on the cables 6 can be improved. It suffices that the spacer 8 is attached only on a portion corresponding to the cable restraining section 7, as shown in part (b) of Fig. 3, but the spacer 8 may be attached over substantially the entire length of the cables 6.

Further, at the front edge of the case 1, pressing pieces 9 protrude laterally, so that rise of the cables 6 routed along the surface of the case 1 as a result of being bent substantially at a right angle at the cable restraining section 7 is restricted.

Thus, in this embodiment, the push-button switch 2-1 is fixed on the case 1 and the capacitance sensor 2-2 and the antenna 2-3 are housed in the electronic component holding frame 10, and the cables 6 therefrom are guided to the cable restraining section 7 by being passed under the pressing pieces 9 and bent at a right angle so that slack of the cables 6 on the case 1 can be prevented. In this way, sliding resistance is generated at each of the pressing pieces 9, the bending section, and the cable restraining section 7, thereby preventing slack of the cables 6 on the case 1.

By filling filler resin such as silicone resin into the electronic component holding frame 10 in the above state, the case sub-assembly body 3 is formed in which the filler resin is solidified without slack of the cables 6.

The handle device is formed by connecting the cover 4 to the case sub-assembly body 3 formed as described above. Since slack of the cables 6 on the case 1 in the case sub-assembly body 3 is effectively prevented, the cables 6 will not get caught when the cover 4 is connected.

### EXPLANATION OF REFERENCE NUMERALS

- 1: CASE
- 2: ELECTRONIC COMPONENT
- 3: CASE SUB-ASSEMBLY BODY
- 4: COVER
- 5: CABLE GUIDE
- 6: CABLE
- 7: CABLE RESTRAINING SECTION
- 8: SPACER
- 9: PRESSING PIECE
- 10: ELECTRONIC COMPONENT HOLDING FRAME

## Claims

1. A handle device for a vehicle, the handle device being formed by overlaying and connecting a cover on and to a case sub-assembly body including a case and an electronic component held therein, wherein
the case is provided with a cable restraining section configured to perpendicularly bend and restrain a cable which is led out of the electronic component and led by a cable guide to an end of the case along an electronic component mounting surface, and
the cable restraining section restricts slack of the cable in a path on the case sub-assembly body from the electronic component to the cable restraining section, to thereby prevent the cable from being caught when the cover is overlaid.

2. The handle device for a vehicle according to claim 1, wherein
the cable restraining section is formed in a cylindrical shape with a side wall section thereof cut out along a longitudinal direction such that the cable restraining section is capable of elastically retaining the cable, and
an elastic spacer is interposed between the cable and the cable restraining section to thereby improve sliding contact resistance of the cable on the cable restraining section.

3. The handle device for a vehicle according to claim 2, wherein the spacer is formed in a tubular shape for bundling a plurality of the cables.

4. The handle device for a vehicle according to claim 1, wherein, at the end of the case, a pressing piece is provided which is configured to restrict rise of the cable due to forcible bending thereof at the cable restraining section.

5. The handle device for a vehicle according to claim 1, comprising an electronic component which is housed in an electronic component holding frame formed on the case and is fixed by filler resin that solidifies with time, wherein
the cable restraining section restrains a cable led out of the electronic component to thereby prevent slack of the cable inside the electronic component holding frame.
